# EUROPEAN PATENT SPECIFICATION

(11) **EP 3 083 447 B1**
(45) Date of publication and mention of the grant of the patent: **25.10.2017**
(21) Application number: 14830720.0
(22) Date of filing: 19.12.2014
(51) Int. Cl.: B65D 85/804

(54) **INTERCHANGEABLE CAPSULE TO PREPARE AN INFUSION OF A POWDERED PRODUCT, AND RELATIVE METHOD TO OBTAIN THIS INFUSION**
AUSTAUSCHBARE KAPSEL ZUR HERSTELLUNG EINER INFUSION EINES GEPULVERTEN PRODUKTS UND VERFAHREN ZUR HERSTELLUNG DIESER INFUSION
CAPSULE INTERCHANGEABLE POUR PRÉPARER UNE INFUSION D'UN PRODUIT EN POUDRE ET PROCÉDÉ ASSOCIÉ POUR OBTENIR CETTE INFUSION

(30) Priority: 20.12.2013 IT BO20130702
(43) Date of publication of application: 26.10.2016
(73) Proprietor: Macchiavelli S.r.l., 40068 San Lazzaro di Savena (BO) (IT)
(72) Inventor: RONDELLI, Raffaele, I-40050 Argelato (IT)
(74) Representative: Cataldi, Giulia
(86) International application number: PCT/IB2014/067169
(87) International publication number: WO 2015/092766

(56) References cited:
- EP-A1- 0 224 297
- EP-A2- 2 465 792
- WO-A1-01/60220
- WO-A1-2008/136026
- WO-A1-2013/132436
- US-A1- 2006 065 127
- US-A1- 2011 274 802
- US-A1- 2012 097 602
- US-A1- 2013 156 897

## Description

### TECHNICAL FIELD

The present invention relates to an interchangeable capsule to prepare an infusion of a powdered product, for example coffee or similar products.

The present invention also relates to a method for obtaining an infusion of said powdered product.

In particular, the present invention is directed to prepare the so-called "American coffee".

Incidentally, although the present invention has advantageous but not exclusive application to the interchangeable capsules to prepare an infusion of "American coffee" (to which the following description will make explicit reference without loss of generality), the teachings of the present invention may be applied to any type of interchangeable capsule for example to the interchangeable capsules for espresso coffee, tea, chamomile etc..

### BACKGROUND ART

As known, being defined as "American coffee" is an infusion obtained by the use of a particular machine wherein the hot water passes through a filter containing the grounded, un-pressed coffee and is deposited by gravity into an underlying carafe.

The coffee that is used to prepare said beverage differs from that used in "moka" machines or Italian espresso by the fact of being coarsely ground and not being subjected to any precompression when arranged inside the capsule.

Coffee maker machines specially made to prepare American coffee and characterized by a very simple operation are commercially available.

In fact, these machines comprise a water tank, a pump that sends the heated water inside a small container provided with a paper filter containing the coffee. The hot water submerges the coffee and, passing through the paper filter, falls by gravity into the underlying carafe suited to keep the drink hot for a long time as it is heated by a suitable electrical resistance element.

In addition to the traditional American coffee makers wherein the cup-shaped filter is filled manually by the user, capsules which have an outer casing wherein a paper filter partly filled with un-pressed coffee is inserted have recently appeared on the market.

By means of specialized percolator machines the lid and the bottom in plastic material are perforated so as to create a flow of hot water allowing an infusion of the coffee powder.

However, the capsules currently on the market do not work reliably. In fact normally only providing a filter on the bottom, the incoming hot water is induced to flow along substantially vertical preferential fluid threads and therefore does not affect the entire mass of the powdered product contained inside the capsule.

It is also known, by US 2013/156897 A1 or US 2006/065127 A1 or US 2011/274802 A1, to provide a capsule comprising a bottom deflector or lateral ribs so as to affect the circulation of the infusion and improve the quality of the "American coffee". However these known capsules have the disadvantage that the quality of the infusion is still not maximized.

### DISCLOSURE OF INVENTION

Therefore, the main purpose of the present invention is to provide an interchangeable infusion capsule wherein the infusion water path within the capsule itself is as extended and tortuous as possible to delay the infusion time and to affect a greater quantity of product as possible.

Further object of the present invention is to provide an innovative method for obtaining said infusion.

According to the present invention, therefore, a interchangeable capsule is obtained, as claimed in claim 1 or in any of the claims depending directly or indirectly on claim 1.

Always in accordance to the principles of the present invention, is provided an innovative method for obtaining an infusion of a powdered product, as claimed in claim 13 or in any of the claims depending directly or indirectly on claim 13.

### BRIEF DECRIPTION OF THE DRAWINGS

For a better understanding of the invention in the following is described a purely illustrative and not limitative embodiment, with the aid of the accompanying drawings, wherein:
- Figure 1 illustrates an exploded view of a capsule according to the present invention;
- Figure 2 is a longitudinal section of the capsule, in use, according to the present invention;
- Figure 3 is a plan view of a variant in a first detail; and,
- Figure 4 illustrates the section IV-IV of Figure 3.

### BEST MODE FOR CARRYING OUT THE INVENTION

In the attached figures a preferred embodiment of an interchangeable capsule 90 according to the teachings of the present invention has been shown.

The interchangeable capsule 90 is suited to contain inside, as will be better explained later, a certain quantity of a powdered product (for example coffee) for obtaining an infusion, in particular of "American coffee" according to the definition given above.

The interchangeable capsule 90 comprises a cup-shaped body 101, which has a longitudinal axis (Y), an inner cavity 91, an upper opening 92 and a lower opening 93 opposite to each other. The capsule 90 also comprises a lid 102, which closes said upper opening 92, and a basket 94, which is arranged inside the cup-shaped body 101 and is suited to house the powdered product.

The basket 94 is made substantially of water-permeable material and acts as a filtering means for the infusion created by the water and by the powdered product, as will be further and better explained. Preferably, the basket 94 is made of non-woven fabric; alternatively, the basket 94 is made of plastic material for food use and has a plurality of micro slits for filtering the infusion. Preferably, the basket 94 is made of a deformable material.

The basket 94 is fixed inside the capsule 90 by means of the interaction between the cup-shaped body 101 and the lid 102 and rests on the bottom 101A of the cup-shaped body 101, as will be better explained later. The capsule 90 comprises, finally, a base 100 defined by a disc of rigid material with a circular profile. Preferably, the bottom cover 100 is made of plastic material suitable for food use. The bottom cover 100 is inserted in the basket 92 so as to extend transversely to the longitudinal axis (Y) and is interposed between the upper opening 92 and the lower opening 93.

The cup-shaped body 101 comprises, in turn, a bottom 101A obtained advantageously, but not necessarily, in one piece with a lateral wall 101B.

Note that through the bottom 101A an axis (X) passes, that lies substantially on a plane (n) which defines a substantially horizontal direction.

Furthermore, in the present context any "substantially horizontal" body element or device is a body element or device that lies substantially on the plane (n). It must obviously be considered as "substantially horizontal" also body elements or devices which lie substantially on any plane parallel to the plane (n).

As shown in the figures, the longitudinal axis (Y) is a central vertical axis of symmetry perpendicular to said axis (X).

So, in the present context any body element or device "substantially vertical" is a body element or device that substantially extends according to the direction defined by the axis (Y).

The lateral wall 101B has the usual substantially frusto-conical countersunk shape along the axis (Y).

The cup-shaped body 101 has an upper end 103 and comprises a contact edge 104 in the shape of a circular crown which protrudes radially outside the lateral wall 101B to ensure that the entire interchangeable capsule 90 can be housed in an appropriate receptacle obtained in a percolator machine (not shown). The supporting edge 104 also has a circular recess 104A obtained along the entire inner circular perimeter of the contact edge 104 itself. The recess 104A is facing inside the cavity 91.

The cup-shaped body 101 comprises, furthermore, a ring 111 coaxial with the axis (Y) and which axially protrudes from the bottom 101A outside of the cup-shaped body 101 itself. The ring 111 is suited to form a watertight sealing area in contact with a contact base of the capsule 90.

Preferably, but not necessarily, the bottom 101A, the lateral wall 101B, the contact edge 104 and the ring 111 are made in one piece with a suitable, known type plastic material for food use.

The cup-shaped body 101 also comprises a plurality of ribs 105 that protrude longitudinally to the lateral wall 101B and within the cavity 91. The ribs 105 are evenly distributed around the axis (Y). Two adjacent ribs 105 of the cup-shaped body 101 define a respective infusion channel 106. Each rib 105 extends from the bottom 101A up to about 80% of the overall longitudinal extension of the cavity 91.

The cup-shaped body 101 comprises, furthermore, a plurality of support elements 107, which protrude from the bottom 101A inside the cavity 91. As shown in the figures, the lower opening 93 is concentric with the axis (Y) and the support elements 107 are evenly distributed around said lower opening 93.

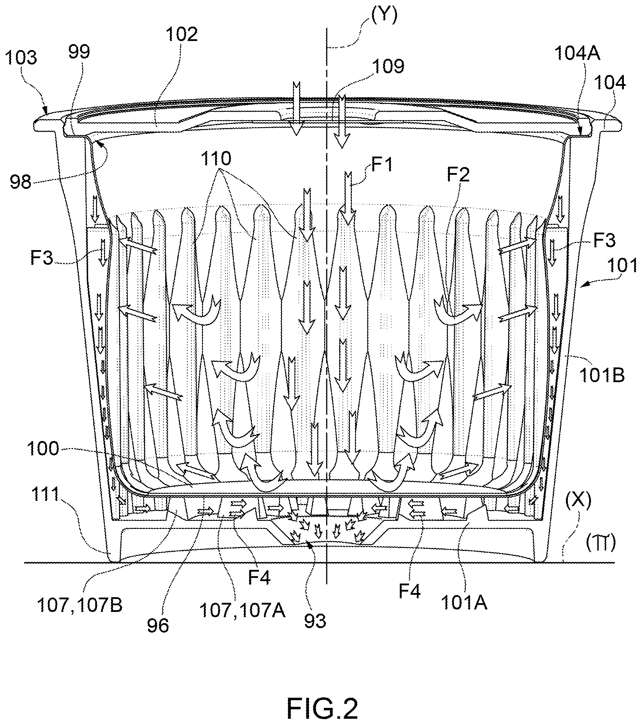

The support elements 107 form a labyrinth path. In particular, the support elements 107 are divided into radial walls 107A and curved walls 107B. The radial walls 107A are interposed between the curved walls 107B and the opening 93. As shown in Figure 2, the curved walls 107B are evenly distributed around the longitudinal axis (Y) and are formed as portions of a cylindrical body. Preferably the walls 107B are four and each curved wall 107B has a central angle of about 80°. The radial walls 107A are evenly distributed around the longitudinal axis (Y). Preferably the radial walls 107A are fourteen.

As a result from what has just been described, each support element 107 is spaced from another support element 107, so that on the bottom of the cup-shaped body 101 a labyrinth path arranged radially around the lower opening 93 is formed.

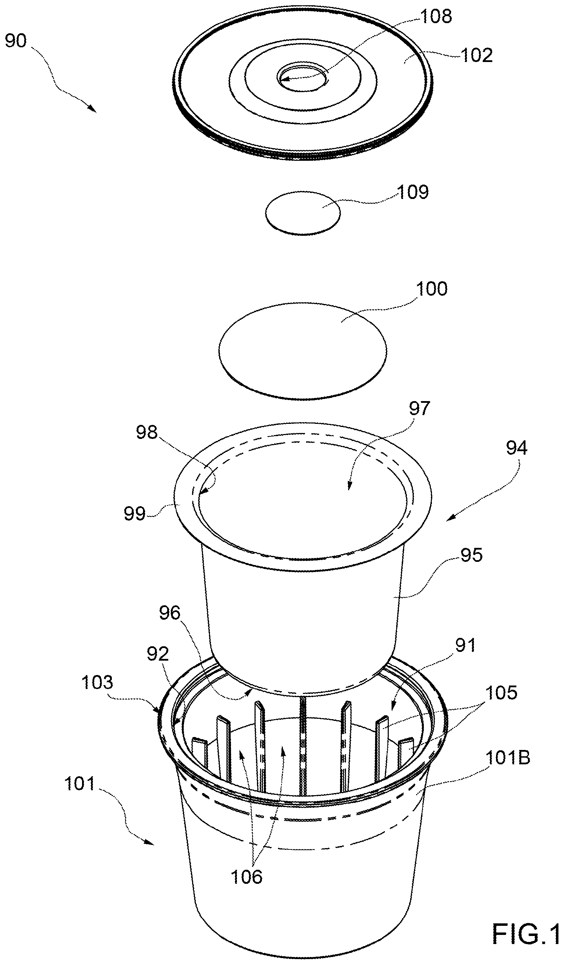

As illustrated in Figures 1 and 2, the basket 94 has the shape of a cup-shaped body and comprises a lateral wall 95 and a bottom 96, which delimit an inner cavity 97 and an upper opening 98. The basket 94 also comprises an edge 99 which projects radially outwards from the lateral wall 95.

Finally, the lid 102 has a substantially circular shape in plan and has a circular shaped central hole 108 for the passage of water. Preferably, the lid 102 is made of known type plastic material for food products. The lid 102 also comprises a filter 109 suited to close the hole 108. Preferably, the filter 109 is made of non-woven fabric or, alternatively, is made of plastic material for food use and is suited to be torn at the time of use. According to a variant, not illustrated, the lid is made of a peelable film material fixed in a known manner, for example welded, on the edge 104 of the cup-shaped body 101. According to a variant, not illustrated, the lid is continuous and has no holes or filters.

As shown in the figures, the basket 94 is arranged within the cup-shaped body 101 so that its bottom 96 is in contact with the support elements 107 of the cup-shaped body 101 itself. Preferably, the bottom 96 of the basket 94 is fixed in a known manner, for example welded, on the support elements 107. The edge 99 of the basket 94 is supported on the recess 104A of the cup-shaped body 101. Preferably, the edge 99 is welded in a known way on the recess 104A.

The bottom cover 100 is inserted inside the cavity 97 of the basket 94 and is arranged so as to be coaxial with the axis (Y). Preferably, the bottom cover 100 is resting on the bottom 96 of the basket 94. The bottom cover 100 is fixed to the bottom 96 of the basket 94 by way of known methods (hence the bottom cover 100 is fixed by means of the basket 94 also to the support elements 107); for example, the bottom cover 100 is welded or glued to the bottom of the basket 94.

According to a variant not illustrated, the bottom cover 100 is fixed to the bottom 96 of the basket 94 and to the outside of the cavity 97. According to a further variant, not illustrated, the basket 94 has a tubular shape and the bottom cover 100 is arranged to close said tubular shape acting substantially as a bottom for the basket 94. According to a further variant, not illustrated, the bottom cover 100 is fixed, for example welded or glued, onto the support elements 107.

The lid 102 is arranged within the upper opening 92 and is coaxial with the longitudinal axis (Y). The lid 102 is supported within the recess 104A and on the edge 99. Preferably, the lid 102 is welded to the edge 104 of the cup shaped body 101 at the recess 104A. Preferably, the lid 102 is mounted with interference inside the edge 104 of the cup-shaped body 101 so as to hold the edge 99 of the basket 94 against the cup-shaped body 101 itself.

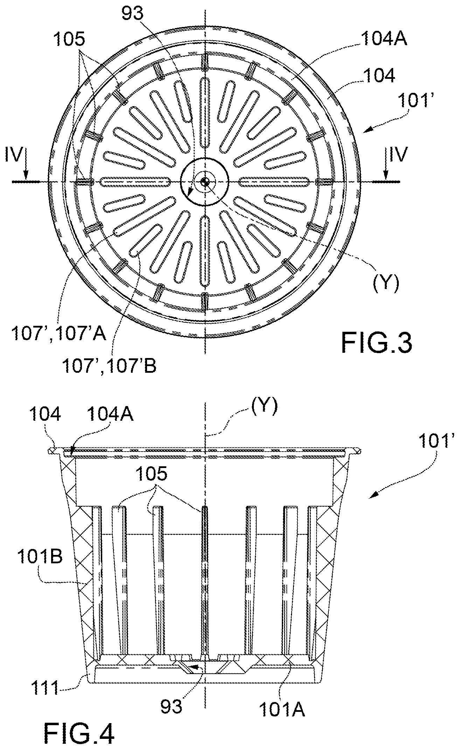

In Figures 3 and 4 an alternative 101' of the cup-shaped body 101 is illustrated, it is noted that in figures 3 and 4 the elements in common with the cup-shaped body 101 maintain the same numbering. The cup-shaped body 101' comprises a plurality of support elements 107', which protrude from the bottom 96 inside the cup-shaped body 101 itself. The support elements 107' are arranged radially around the axis (Y). The support elements 107' form a labyrinth path. The support elements 107' are divided into bars of larger dimensions 107'A and into bars of smaller dimensions 107'B. Two adjacent bars of smaller dimensions 107'B are interspersed with a bar of larger dimensions 107'A.

The different arrangements of the support elements 107 or 107' on the bottom 96 of the cup-shaped body 101 or 101' are suited to maximize the outflow and the quality of the infusion.

Preferably, the cup-shaped body 101, 101' and/or the basket 94 and/or the lid 102 are made of biodegradable material.

The operation of the present capsule 90 is the following:
a) Pressurized or percolated hot water in the cup-shaped body 101, 101' is introduced through the hole 108 (possibly by breaking the filter 109 if made of plastic material) according to the direction and the way identified by the arrow (F1);
b) the hot water after passing the filter 109 immediately meets the powdered product arranged in the cavity 97 of the basket 94 and the produced infusion liquid/hot water begins to form;
c) said infusion liquid impacts the bottom 100 and is deflected horizontally and radially according to the directions and the ways of the arrows (F2);
d) the infusion liquid is pushed through the lateral walls 95 and outside the basket 94;
e) the lateral wall 95 of the basket 94 is deformed under the action of water pressure and against the ribs 105 of the cup-shaped body 101 so to have a substantially curvilinear trend with an alternation of longitudinal protrusions 110 protruding inside the cavity 97, as will be better explained in the following;
f) the infusion liquid colliding with the lateral walls 101B of the cup-shaped body 101, 101' is channeled within the channels 106 between the ribs 105;
g) the infusion liquid flows along the channels 106 towards the bottom 101A of the cup-shaped body 101, 101' in the direction (F3); and
h) the infusion liquid flows radially in the direction (F4) on the bottom 101A towards the opening 93 and then is distributed to the outside of the capsule 90; flowing on the bottom 101A the infusion fluid passes through the labyrinth path created by the support elements 107, 107'.

In particular, each protrusion 110 is made so as to be arranged at least partially around a respective rib 105.

Preferably, each protrusion 110 is tapered in the vicinity of both ends. In particular, each protrusion 110 has a substantially trapezoidal cross-section the size of which varies along the axis (Y). Preferably each protrusion has a radial extension along the lateral wall 95 in correspondence of the lower longitudinal ends and increased in correspondence to a central area. Preferably the trapezoidal profiles of two adjacent protrusions 110 are in contact with each other in the vicinity of a substantially central area. Each protrusion 110 is suited to wrap, at least partially, a respective rib 105, as will be better explained in the following.

After the delivery of the infusion the cup-shaped body 101, 101' can be tightened below the edge 104 so as to cause a plastic deformation in the cup-shaped body 101, 101' itself, and to allow to extract the lid 102. In this way it is possible to clean up (for example by emptying and rinsing) the basket 94 and separate the plastic material from the organic material so as to facilitate the recycling and separate collection of all the components of the capsule 90.

From the above description, the bottom cover 100 is transverse to the direction F1 of the liquid inserted in the basket 94 so as to divert the direction horizontally. The basket 94 basically acts as a filtering means wherein the lateral wall 95 is suited to filter the infusion created by the mixing of water and powdered product.

The present invention also relates to a method for the production of a beverage infusion in particular of American coffee; the method is characterized by the following steps:
(f1) centrally and vertically injecting a given amount of hot water into the basket 94;
(f2) causing at least part of the hot water to be deflected in a substantially horizontal direction by the deflector device 100;
(f3) deforming the lateral wall 95 of the basket 94 by means of the interaction of the hot water and of the spacer elements, such as the ribs 105;
(f4) filtering the infusion in said substantially horizontal direction causing it to pass through substantially vertical filtering means 95; 110 of the basket 94 so as to convey said filtered infusion in preferential channels 106 created between the cup-shaped body 90 and the basket 94;
(f5) converging the filtered infusion along said preferential channels 106 towards the bottom 101A of the cup shaped body 101; 101'; and
(f6) mixing the filtered infusion by means of the support elements 107; 107' before the outflow of the filtered infusion itself from the capsule 90 through the opening 93 on the bottom 101A of said cup-shaped body 101; 101'.

The advantages of the capsule object of the present invention are the following:
- the capsule 90 of the invention has preferably, but not necessarily, a hole 108 from which the first entry of the hot water from a jet of the machine takes place; the hot water is thus evenly distributed in the mass of powdered product contained inside the basket 94; this feature allows to control in a uniform and constant way the distribution of water in the capsule 90 itself;
- the bottom of the basket 94 is closed to prevent preferential vertical outflows of water in the infusion step, as instead happens for the other known capsules on the market having a filter on the bottom or a single opening created due to a puncture of the bottom itself;
- the filtering area of the infusion is substantially vertical through the lateral walls 95 of the basket 94 so as to have a larger filtration area with respect to the capsules providing a coffee filter arranged only on the bottom; furthermore, this vertical filtering creates a turbulence effect improving the exploitation of the product to be infused;

- with the capsule 90 it is possible, in the industrialization step, to perform central dosing thus simplifying the implementation of the machinery responsible for the packaging of the same;
- the ribs 105 maintain the lateral wall 95 of the basket 94 spaced from the lateral wall 101B of the cup-shaped body 101, 101' preventing the two to adhere (in this case the infusion liquid would not be able to flow out in the direction (F3) outside the basket 94);
- the ribs 105 together with the lateral wall 95 of the basket 94 delimit a plurality of preferential channels 106 which allow the outflow of the infusion liquid and allow particularly advantageous timing and constant dispensing; in particular, it is to be noted that the shape and the size of each preferential channel 106 is definable by the suitable dimensioning of the ribs 105, so as to obtain the best possible quality of fluid infusion given by obtaining both the optimal pressure and speed of the outflow;
- the protrusions 110 increase the filtration area being equal the total radial dimensions of the capsule 90; and
- the particular distribution of the support elements 107 on the bottom 101A allows to create a tortuous path of the filtrated infusion liquid thus improving the quality, in particular, allowing a greater extractive capacity of the infusion; moreover, the path of the support elements 107 affects the outflow of the filtrated infusion liquid along said preferential channels 106;
- the possibility to easily disassemble the lid 102 and the basket 94 from the cup-shaped body 101, 101' enables the total recyclability of all the components of the capsule 90 being able to differentiate the components, one with respect to the other, according to the type of waste (plastic-organic); moreover, in this way it is also possible to reuse multiple times the cup-shaped body 101, 101' and the lid 102 only substituting the basket 94 (reduction of waste).

## Claims

1. A capsule to prepare an infusion of a powdered product, in particular American coffee, and comprising:
- a cup-shaped body (101; 101') comprising a bottom (101A), which has an opening (93), and a lateral wall (101B);
- a basket (94) for containing the powdered product which is made of filtering material and is arranged inside said cup-shaped body (101; 101');
- support elements (107; 107'), which are arranged between the bottom (101A) of the cup-shaped body (101; 101') and the basket (94);
- spacer elements (105) which are suited to delimit a plurality of preferential channels (106) between the lateral wall of the cup-shaped body (101; 101') and the basket (94);
the capsule **being characterized in that** it comprises a deflector device (100) transverse to the longitudinal axis (Y); and **in that** the support elements (107; 107') are interposed between the preferential channels (106) and the opening (93) and are suited to create a labyrinth path for an infusion fluid coming from said preferential channels (106).

2. A capsule according to claim 1, wherein the basket (94) has the shape of a cup-shaped body and comprises a lateral (95) and a bottom (96) wall, which delimit an inner cavity (97) and an opening (98); the lateral wall (95) of the basket (94) is made of a deformable material; in particular, the basket (94) is made of a deformable material.

3. A capsule according to claim 1 or 2, wherein the spacer elements (105) are interposed between the lateral wall (101B) of the cup-shaped body (101; 101') and a lateral wall (95) of the basket (94) so as to avoid adherence between the lateral wall (95) of the basket (94) and the lateral wall (101B) of the cup-shaped body (101, 101') and to delimit the preferential channels (106); wherein the spacer elements (105), in particular a plurality of ribs, are projecting longitudinally from the lateral wall (101B) inside the cup shaped body (101; 101').

4. A capsule according to claim 2 or 3, wherein the deflector device (100) comprises a circular shaped plate arranged inside the cavity (97) of the basket (94); in particular, the deflector device (100) is arranged in the vicinity of the bottom (101A).

5. A capsule according to claim 4, wherein the deflector device (100) is resting on the bottom (96) of the basket (94); in particular, the deflector device (100) is fixed to the bottom (96) of the basket (94).

6. A capsule according to one of claims 1 to 3, wherein the deflector device (100) is supported on the support elements (107; 107') of the tubular body (101; 101'); in particular, the deflector device (100) is fixed to said support elements (107; 107').

7. A capsule according to one of the preceding claims and comprising a lid (102), which is arranged to close said cup-shaped body (101; 101'); wherein the cup-shaped body (101; 101') further comprises a contact edge (104) in the shape of a circular ring, which protrudes radially outside the lateral wall (101B); the basket (94) also comprising an edge (99) which has the form of a circular ring and radially protrudes outside the lateral wall (95); wherein said edge (99) is interposed between the contact edge (104) and the lid (102); wherein the lid (102) is releasably mounted with respect to the cup-shaped body (101).

8. A capsule according to claim 7, wherein the contact edge (104) has a recess (104A) formed along the entire inner circular perimeter of the contact edge (104) itself and facing the cup-shaped body (101); the edge (99) of the basket (94) resting in contact with said recess (104A) of the cup-shaped body (101).

9. A capsule according to one of the preceding claims, wherein the opening (93) is coaxial with the axis (Y); wherein the support elements (107; 107') are evenly distributed around said opening (93) so as to provide a tortuous path, i.e. of a labyrinth type, of the infusion liquid; wherein the support elements (107; 107') are protruding from the bottom (101A) inside the cup shaped body (101; 101'); in particular, wherein the support elements (107; 107') are supporting the basket (94).

10. A capsule according to claim 9 and comprising a plurality of first support elements (107A) and a plurality of second support elements (107B); wherein the first support elements (107A) are radial walls and the second support elements (107B) are curved walls; wherein the first support elements (107A) are interposed between the second support elements (107B) and the opening (93).

11. A capsule according to claim 9 and comprising a plurality of first support elements (107'A) and a plurality of second support elements (107'B); wherein the first support elements (107'A) and the second support elements (107'B) are radial walls; wherein the first support elements (107'A) are larger in size than the second support elements (107'B); wherein two first adjacent support elements (107'A) are spaced one with respect to the other by a second support element (107'B).

12. A capsule according to one of the preceding claims, wherein the cup-shaped body (101, 101') and/or the basket (94) and/or the lid (102) are made of biodegradable material.

13. A method for obtaining an infusion of a powdered product, in particular American coffee, by means of a capsule (90) according to claim 1; the method being **characterized by** the following steps:
(f1) centrally and vertically injecting a given amount of hot water into the basket (94);
(f2) causing at least part of the hot water to be deflected in a substantially horizontal direction by the deflector device (100) ;
(f3) deforming at least a portion, in particular the lateral wall (95) of the basket (94) by means of the interaction of the hot water and of the spacer elements (105), in particular ribs, so as to form protrusions (110);
(f4) filtering the infusion in said substantially horizontal direction by causing it to pass through substantially vertical filtering means (95; 110) of the basket (94) so as to convey said filtered infusion in preferential channels (106) obtained between the cup-shaped body (90) and the basket (94);
(f5) causing the filtered infusion to converge along said preferential channels (106) towards the bottom (101A) of the cup-shaped body (101; 101'); and
(f6) mixing the filtered infusion by means of support elements (107; 107') before the out coming of the filtered infusion itself from the capsule (90) through the opening (93) on the bottom (101A) of said cup-shaped body (101; 101').

14. A method according to claim 13, wherein the step of deforming the lateral wall (95) of the basket (94) envisages to obtain a plurality of longitudinal protrusions (110), which protrude from said lateral wall (95) inside the cavity (97); in particular, each protrusion (110) is suited to be arranged at least partially around a respective spacer element (105) of the cup-shaped body (101; 101').

## Patentansprüche

1. Kapsel zum Zubereiten eines Aufgusses aus einem Pulverprodukt, insbesondere amerikanischem Kaffee bzw. schwarzem Kaffee, und umfassend:
- einen becherförmigen Körper (101; 101'), der einen Boden (101A), der eine Öffnung (93) aufweist, und eine laterale Wand (101B) umfasst;
- einen Korb (94) zum Enthalten des Pulverprodukts, der aus Filtermaterial besteht und innerhalb des becherförmigen Körpers (101; 101') angeordnet ist;
- Stütz- bzw. Trägerelemente (107; 107'), die zwischen dem Boden (101A) des becherförmigen Körpers (101; 101') und dem Korb (94) angeordnet sind;
- Abstandselemente (105), die geeignet sind, eine Mehrzahl von bevorzugten bzw. vorrangigen Kanälen (106) zwischen der lateralen Wand des becherförmigen Körpers (101; 101') und dem Korb (94) zu begrenzen;
wobei die Kapsel **dadurch gekennzeichnet ist, dass** sie eine Deflektor- bzw. Ablenkvorrichtung (100) quer zu der Längsachse (Y) umfasst; und dadurch, dass die Stütz- bzw. Trägerelemente (107; 107') zwischen den vorrangigen Kanälen (106) und der Öffnung (93) angeordnet sind und geeignet sind, einen Labyrinthpfad für eine Aufgussflüssigkeit zu bilden, die von den vorrangigen Kanälen (106) kommt.

2. Kapsel nach Anspruch 1, wobei der Korb (94) die Form eines becherförmigen Körpers aufweist und eine laterale Wand (95) und eine Bodenwand (96) umfasst, die einen inneren Hohlraum (97) und eine Öffnung (98) begrenzen; wobei die laterale Wand (95) des Korbs (94) aus einem verformbaren Material besteht; wobei insbesondere der Korb (94) aus einem verformbaren Material besteht.

3. Kapsel nach Anspruch 1 oder 2, wobei die Abstandselemente (105) zwischen der lateralen Wand (101B) des becherförmigen Körpers (101; 101') und einer lateralen Wand (95) des Korbs (94) angeordnet sind, um ein Anhaften zwischen der lateralen Wand (95) des Korbs (94) und der lateralen Wand (101B) des becherförmigen Körpers (101; 101') zu vermeiden und die vorrangigen Kanäle (106) zu begrenzen; wobei die Abstandselemente (105), insbesondere eine Mehrzahl von Rippen, longitudinal von der lateralen Wand (101B) innerhalb des becherförmigen Körpers (101; 101') vorspringen.

4. Kapsel nach Anspruch 2 oder 3, wobei die Ablenkvorrichtung (100) eine kreisförmige Platte umfasst, die innerhalb des Hohlraums (97) des Korbs (94) angeordnet ist; wobei insbesondere die Ablenkvorrichtung (100) in der Nähe des Bodens (101A) angeordnet ist.

5. Kapsel nach Anspruch 4, wobei die Ablenkvorrichtung (100) auf dem Boden (96) des Korbs (94) aufliegt; wobei insbesondere die Ablenkvorrichtung (100) an dem Boden (96) des Korbs (94) fixiert bzw. befestigt ist.

6. Kapsel nach einem der Ansprüche 1 bis 3, wobei die Ablenkvorrichtung (100) an den Stützelementen (107; 107') des rohrförmigen Körpers (101; 101') gestützt bzw. getragen ist; wobei insbesondere die Ablenkvorrichtung (100) an den Stützelementen (107; 107') fixiert bzw. befestigt ist.

7. Kapsel nach einem der vorhergehenden Ansprüche und umfassend einen Deckel (102), der angeordnet ist, den becherförmigen Körper (101; 101') zu verschließen; wobei der becherförmige Körper (101; 101') ferner eine Kontaktkante (104) in der Form eines kreisförmigen Rings umfasst, der radial nach außen bzw. außerhalb der lateralen Wand (101B) vorspringt; wobei der Korb (94) ebenfalls eine Kante (99) umfasst, welche die Form eines kreisförmigen Rings aufweist und radial nach außen bzw. außerhalb der lateralen Wand (95) vorspringt; wobei die Kante (99) zwischen der Kontaktkante (104) und dem Deckel (102) angeordnet ist; wobei der Deckel (102) bezüglich des becherförmigen Körpers (101; 101') lösbar bzw. entfernbar montiert ist.

8. Kapsel nach Anspruch 7, wobei die Kontaktkante (104) eine Vertiefung (104A) aufweist, die entlang des gesamten inneren kreisförmigen Perimeters der Kontaktkante (104) selbst gebildet ist und dem becherförmigen Körper (101; 101') zugewandt ist; wobei die Kante (99) des Korbs (94) mit der Vertiefung (104A) des becherförmigen Körpers (101; 101') in Kontakt ist.

9. Kapsel nach einem der vorhergehenden Ansprüche, wobei die Öffnung (93) koaxial zu der Achse (Y) ist; wobei die Stützelemente (107; 107') gleichmäßig um die Öffnung (93) herum verteilt sind, um einen gewundenen Pfad, d.h. vom Labyrinthtyp, der Aufgussflüssigkeit bereitzustellen; wobei die Stützelemente (107; 107') von dem Boden (101A) innerhalb des becherförmigen Körpers (101; 101') vorspringen; wobei insbesondere die Stützelemente (107; 107') den Korb (94) stützen bzw. tragen.

10. Kapsel nach Anspruch 9 und umfassend eine Mehrzahl erster Stütz- bzw. Trägerelemente (107A) und eine Mehrzahl zweiter Stütz- bzw. Trägerelemente (107B); wobei die ersten Stützelemente (107A) radiale Wände sind und die zweiten Stützelemente (107B) gekrümmte Wände sind; wobei die ersten Stützelemente (107A) zwischen den zweiten Stützelementen (107B) und der Öffnung (93) angeordnet sind.

11. Kapsel nach Anspruch 9 und umfassend eine Mehrzahl erster Stütz- bzw. Trägerelemente (107'A) und eine Mehrzahl zweiter Stütz- bzw. Trägerelemente (107'B); wobei die ersten Stützelemente (107'A) und die zweiten Stützelemente (107'B) radiale Wände sind; wobei die ersten Stützelemente (107'A) eine größere Größe aufweisen als die zweiten Stützelemente (107'B); wobei zwei erste angrenzende bzw. benachbarte Stützelemente (107'A) eines bezüglich des anderen durch ein zweites Stützelement (107'B) beabstandet sind.

12. Kapsel nach einem der vorhergehenden Ansprüche, wobei der becherförmige Körper (101; 101') und/oder der Korb (94) und/oder der Deckel (102) aus biologisch abbaubarem Material bestehen.

13. Verfahren zum Erhalten eines Aufgusses aus einem Pulverprodukt, insbesondere amerikanischem Kaffee bzw. schwarzem Kaffee, mittels einer Kapsel (90) nach Anspruch 1; wobei das Verfahren durch die folgenden Schritte gekennzeichnet ist:
(f1) zentrales und vertikales Einspritzen einer vorgegebenen Menge heißen Wassers in den Korb (94);
(f2) Bewirken, dass zumindest ein Teil des heißen Wassers in einer im Wesentlichen horizontalen Richtung mittels der Ablenkvorrichtung (100) abgelenkt wird;
(f3) Verformen zumindest eines Abschnitts, insbesondere der lateralen Wand (95) des Korbs (94) durch die Interaktion des heißen Wassers und der Abstandselemente (105), insbesondere Rippen, um Vorsprünge (110) zu bilden;
(f4) Filtern des Aufgusses in der im Wesentlichen horizontalen Richtung, indem er veranlasst wird, im Wesentlichen vertikale Filtermittel (95; 110) des Korbs (94) zu passieren, um den gefilterten Aufguss in bevorzugte bzw. vorrangige Kanäle (106) zu befördern, die zwischen dem becherförmigen Körper (101; 101') und dem Korb (94) erhalten werden;
(f5) Bewirken, dass der gefilterte Aufguss entlang der vorrangigen Kanäle (106) zu dem Boden (101A) des becherförmigen Körpers (101; 101') hin zusammenläuft; und
(f6) Mischen des gefilterten Aufgusses mittels Stütz- bzw. Trägerelementen (107; 107') vor dem Herauskommen des gefilterten Aufgusses selbst aus der Kapsel (90) durch die Öffnung (93) an dem Boden (101A) des becherförmigen Körpers (101; 101').

14. Verfahren nach Anspruch 13, wobei der Schritt des Verformens der lateralen Wand (95) des Korbs (94) vorsieht, eine Mehrzahl von longitudinalen Vorsprüngen (110) zu erhalten, die von der lateralen Wand (95) innerhalb des Hohlraums (97) vorspringen; wobei insbesondere jeder Vorsprung (110) geeignet ist, zumindest teilweise um ein jeweiliges Abstandselement (105) des becherförmigen Körpers (101; 101') herum angeordnet zu werden.

## Revendications

1. Une capsule pour préparer une infusion d'un produit en poudre, en particulier du café américain, et comportant:
- un corps cupuliforme (101 ; 101') ayant un fond (101A), qui comporte une ouverture (93), et une paroi latérale (101B) ;
- un panier (94) pour contenir le produit en poudre qui est composé d'un matériau filtrant et est agencé dans ledit corps cupuliforme (101 ; 101') ;
- des éléments de support (107 ; 107'), qui sont agencés entre le fond (101A) du corps cupuliforme (101 ; 101') et le panier (94) ;
- des éléments d'écartement (105) qui sont adaptés pour délimiter une pluralité de canaux préférentiels (106) entre la paroi latérale du corps cupuliforme (101 ; 101') et le panier (94) ; la capsule étant **caractérisée en ce qu'**elle comporte un dispositif déflecteur (100) transversal à l'axe longitudinal (Y) ; et **en ce que** les éléments de support (107 ; 107') sont intercalés entre les canaux préférentiels (106) et l'ouverture (93) et sont adaptés pour créer un trajet en forme de labyrinthe pour un fluide d'infusion provenant desdits canaux préférentiels (106).

2. Une capsule selon la revendication 1, dans laquelle le panier (94) a la forme d'un corps cupuliforme et comporte une paroi latérale (95) et un fond (96) qui délimitent une cavité interne (97) et une ouverture (98); la paroi latérale (95) du panier (94) est constituée d'un matériau déformable; en particulier, le panier (94) est constitué d'un matériau déformable.

3. Une capsule selon la revendication 1 ou 2, dans laquelle les éléments d'écartement (105) sont interposés entre la paroi latérale (101B) du corps cupuliforme (101; 101') et une paroi latérale (95) du panier (94) afin d'éviter l'adhérence entre la paroi latérale (95) du panier (94) et la paroi latérale (101B) du corps cupuliforme (101, 101') et pour délimiter les canaux préférentiels (106); dans laquelle les éléments d'écartement (105), en particulier une pluralité de nervures, font saillie longitudinalement à partir de la paroi latérale (101B) à l'intérieur du corps cupuliforme (101; 101').

4. Une capsule selon la revendication 2 ou 3, dans laquelle le dispositif déflecteur (100) comprend une plaque de forme circulaire disposée à l'intérieur de la cavité (97) du panier (94); en particulier, le dispositif déflecteur (100) est disposé au voisinage du fond (101A).

5. Une capsule selon la revendication 4, dans laquelle le dispositif déflecteur (100) repose sur le fond (96) du panier (94); en particulier, le dispositif déflecteur (100) est fixé au fond (96) du panier (94).

6. Une capsule selon l'une des revendications 1 à 3, dans laquelle le dispositif déflecteur (100) est supporté sur les éléments de support (107; 107') du corps tubulaire (101; 101'); en particulier, le dispositif déflecteur (100) est fixé auxdits éléments de support (107; 107').

7. Une capsule selon l'une des revendications précédentes et comprenant un couvercle (102), qui est agencé pour fermer ledit corps cupuliforme (101; 101'); dans laquelle le corps cupuliforme (101; 101') comprend en outre un bord de contact (104) en forme de bague circulaire, qui fait saillie radialement à l'extérieur de la paroi latérale (101B); le panier (94) comprend également un bord (99) qui a la forme d'une bague circulaire et fait saillie radialement à l'extérieur de la paroi latérale (95); dans laquelle ledit bord (99) est interposé entre le bord de contact (104) et le couvercle (102); dans laquelle le couvercle (102) est monté de manière amovible par rapport au corps cupuliforme (101).

8. Une capsule selon la revendication 7, dans laquelle le bord de contact (104) présente un évidement (104A) formé le long de l'ensemble du périmètre circulaire interne du bord de contact (104) lui-même et faisant face au corps cupuliforme (101); le bord (99) du panier (94) reposant en contact avec ledit évidement (104A) du corps cupuliforme (101).

9. Une capsule selon l'une des revendications précédentes, dans laquelle l'ouverture (93) est coaxiale à l'axe (Y); dans laquelle les éléments de support (107; 107') sont répartis uniformément autour de ladite ouverture (93) de manière à fournir un chemin tortueux, c'est-à-dire en type de labyrinthe, du liquide d'infusion ; dans laquelle les éléments de support (107; 107') font saillie du fond (101A) à l'intérieur du corps cupuliforme (101; 101'); en particulier, dans laquelle les éléments de support (107; 107') supportent le panier (94).

10. Une capsule selon la revendication 9 et comprenant une pluralité de premiers éléments de support (107A) et une pluralité de seconds éléments de support (107B); dans laquelle les premiers éléments de support (107A) sont des parois radiales et les seconds éléments de support (107B) sont des parois courbes; dans laquelle les premiers éléments de support (107A) sont interposés entre les seconds éléments de support (107B) et l'ouverture (93).

11. Une capsule selon la revendication 9 et comprenant une pluralité de premiers éléments de support (107'A) et une pluralité de seconds éléments de support (107'B); dans laquelle les premiers éléments de support (107A) et les seconds éléments de support (107'B) sont des parois radiales; dans laquelle les premiers éléments de support (107A) ont une taille plus grande que les seconds éléments de support (107'B); dans laquelle les deux premiers éléments de support adjacents (107A) sont espacés l'un par rapport à l'autre par un second élément de support (107'B).

12. Une capsule selon l'une quelconque des revendications précédentes, dans laquelle le corps cupuliforme (101, 101') et / ou le panier (94) et / ou le couvercle (102) sont constitués d'un matériau biodégradable.

13. Procédé pour obtenir une infusion d'un produit en poudre, en particulier du café américain, au moyen d'une capsule (90) selon la revendication 1; le procédé étant **caractérisé par** les étapes suivantes:
(f1) injecter de manière centralisée et verticale une quantité donnée d'eau chaude dans le panier (94); (f2) provoquer la déviation d'au moins une partie de l'eau chaude dans une direction sensiblement horizontale par le dispositif déflecteur (100);
(f3) déformer au moins une partie, en particulier la paroi latérale (95) du panier (94) au moyen de l'interaction de l'eau chaude et des éléments d'écartement (105), en particulier des nervures, de manière à former des saillies (110);
(f4) filtrer l'infusion dans ladite direction sensiblement horizontale en la faisant passer à travers des moyens de filtrage sensiblement verticaux (95; 110) du panier (94) de manière à délivrer ladite infusion filtrée dans des canaux préférentiels (106) agencés entre le corps cupuliforme (90) et le panier (94);
(f5) amener l'infusion filtrée à converger le long desdits canaux préférentiels (106) vers le fond (101A) du corps cupuliforme (101; 101'); et
(f6) mélanger l'infusion filtrée au moyen d'éléments de support (107; 107') avant la sortie de l'infusion filtrée elle-même de la capsule (90) à travers l'ouverture (93) dans le fond (101A) corps cupuliforme (101; 101').

14. Procédé selon la revendication 13, dans lequel l'étape de déformation de la paroi latérale (95) du panier (94) envisage d'obtenir une pluralité de protubérances longitudinales (110) qui dépassent de ladite paroi latérale (95) à l'intérieur de la cavité (97); en particulier, chaque saillie (110) est adaptée pour être disposée au moins partiellement autour d'un élément d'écartement respectif (105) du corps cupuliforme (101; 101').
